## Europäisches Patentamt
## European Patent Office
## Office européen des brevets

(19)

(11) Veröffentlichungsnummer: **0 003 782**
**B1**

(12) **EUROPÄISCHE PATENTSCHRIFT**

(21) Anmeldenummer: **79100385.8**

(22) Anmeldetag: **12.02.79**

(51) Int. Cl.³: **B 29 H 17/00, B 29 H 11/00**

(54) Extrusionsreifen und Verfahren und Vorrichtungen zu ihrer Herstellung

(30) Priorität: **22.02.78 DE 2807489**

(43) Veröffentlichungstag der Anmeldung:
**05.09.79 Patentblatt 79/18**

(45) Bekanntmachung des Hinweises auf die Patenterteilung:
**01.10.80 Patentblatt 80/20**

(84) Benannte Vertragsstaaten:
**BE DE FR GB IT NL SE**

(56) Entgegenhaltungen:
DE - C - 404 839
FR - A - 2 045 400
US - A - 1 446 165
US - A - 1 770 531
US - A - 1 877 805
US - A - 1 952 470
US - A - 2 050 214
US - A - 3 881 983
US - A - 4 033 395

(73) Patentinhaber: **BAYER AG**
**Zentralbereich Patente, Marken und Lizenzen**
**D - 5090 Leverkusen 1, Bayerwerk (DE)**

(72) Erfinder: **Knipp, Ulrich, Dr.**
**Haberlandstrasse 3**
**D - 5060 Bergisch - Gladbach 2 (DE)**
**Ganster, Otto, Dr.**
**Berliner Strasse 64**
**D - 5090 Leverkusen (DE)**
**Sahler, Gerd**
**Nr. E 31**
**D - 5090 Leverkusen 1 (DE)**
**Backhoff, Werner**
**Am Höhenfeld 9**
**D - 5074 Odenthal (DE)**

Courier Press, Leamington Spa, England.

Extrusionsreifen und Verfahren und Vorrichtungen zu ihrer Herstellung

Reifenartige Gebilde lassen sich nach verschiedenartigen Verfahren herstellen. Grundsätzlich sind zwei Fertigungsarten möglich: Die integrale Reifenfertigung, beispielsweise durch Schleuderguß oder der Zusammenbau eines Reifens aus einfach herzustellenden Teilen, wobei eine Art dieser Fertigung von zwei einzeln hergestellten Reifenhälften ausgeht, während nach einer zweiten Art der Fertigung das reifenartige Gebilde aus einem Endlosschlauch gebildet wird, typisches Beispiel ist der Fahrradschlauch. Die Fertigung, bei der der Reifen aus Teilen zusammengesetzt wird, ist zwar in mancher Hinsicht weniger aufwendig als die integrale Fertigung. Trotzdem ist erheblicher Aufwand zum Einbau der in den meisten Fällen unverzichtbaren Armierung notwendig. Mit der bekannten kontinuierlichen Fertigungstechnik eines "Endlosschlauches", der in Stücke zerschnitten wird, die zu Reifen zusammengefügt werden, wie es beispielsweise in der US—PS 4 033 395 beschrieben ist, lassen sich nur vergleichsweise einfache Kunstoffreifen herstellen. Sie weisen keine Querprofilierungen auf und haben keine Armierungseinlagen. Der notwendige feste Sitz auf der Felge ist nicht ausreichend gegeben, denn neben einem ca. 8- bis 12-mal höheren Wärmeausdehnungskoeffizienten als bei Stahl führt auch die unvermeidlich bleibende Dehnung unter Druck zu einer Längung des Reifenkörpers. Bei dem in der US—PS 1 877 805 beschriebenen Verfahren wird beim Extrusionsprozeß eine Querprofilierung angeformt. Da diese Reifen jedoch auch keine Armierungseinlagen enthalten, ist auch der dauernde feste Sitz des Reifens auf der Felge nicht ausreichend.

Aufgabe der Erfindung ist es, einen Reifen mit hochwertigen Eigenschaften mit Armierungselementen und ein geeignetes Herstellungsverfahren dafür zu entwickeln. Insbesondere soll kein kompliziertes Werkzeug zur Kernentformung erforderlich sein; die Wirtschaftlichkeit des Fertigungsverfahrens ist besonders zu beachten. Die Aufgabe wird dadurch gelöst, daß bei der Extrusion die Armierungseinlagen eingebaut und diese an den Enden untereinander verbunden werden.

Nach diesem Verfahren lassen sich Reifen mit hochwertigen Eigenschaften herstellen. Der endlos extrudierte Körper ist sehr gleichförmig; es sind keine Sicherheitszuschläge erforderlich; das Material läßt sich sehr sparsam einsetzen, zumal die verwendeten Elastomere eine hohe Abriebfestigkeit und Einreißfestigkeit haben.

Die Extrusion des endlosen Körpers geschieht mittels handelsüblicher Extruder unter Verwendung von Querspritzköpfen; diese ermöglichen das kontinuierliche Einführen der Verstärkungskabel bzw. des Verstärkungscords. Die thermoplastisch verarbeitbaren Elastomeren werden als Granulat in einem Umlufttrockenofen getrocknet und dann dem Extruder zugegeben. Die Temperaturen im Extruder liegen üblicherweise zwischen 180 und 200°C; die Temperatur am Extrusionsprofil ist auf einen Wert zwischen 170 und 180°C abgesenkt. Verstärkungskabel bzw. Cordfäden werden zur Einstellung eines homogenen Reifenaufbaues über einen Bremszylinder unter leichter, gleichmäßiger Spannung gehalten.

Die Koextrusion verschiedener Polymere ist bekannt. Sie wird bei dem erfindungsgemäßen Reifen besonders bevorzugt, da es dadurch möglich ist, jeweils optimal geeignetes Material für verschieden beanspruchte Teile einzusetzen, beispielsweise ein weicheres Material für die Laufflächen und ein härteres für die Karkassen. Bei Anwendung der Koextrusion werden die Produkte über jeweils einen Extruder dosiert und plastifiziert und im Extrusionswerkzeug (Querspritzkopf) zusammengefuhrt. Bei Verwendung eines in Extrusionsrichtung gekrümmten Spritzwerkzeugs ist der endlose Körper spiralförmig. Beim Ablängen eines entsprechenden Stückes liegt bereits die Form eines reifenartigen Gebildes vor.

Bei dem erfindungsgemäßen Herstellungsverfahren ist es erforderlich, daß für hochwertige Reifen die strangförmigen Armierungselemente an den Stoßstellen miteinander verbunden werden. Das geschieht bei Stahlarmierungen in vorteilhafter Weise dadurch, daß die Enden in dem extrudierten Reifenstück durch zusätzliche eingebrachte überlappende Stahlarmierungen in Form von Drähten oder profilierten Stahlabschnitten, beispielsweise durch Anpressen, miteinander verbunden werden. Auf diese Weise werden auch die Einlagen im Reifenfuß miteinander verbunden. Es kann jedoch auch zweckmäßig sein, wenn in den Reifenfuß getrennt hergestellte Wulstdrahtringe in Ausnehmungen des Reifenfußes eingelegt werden, wobei der Wulstdraht mit dem Reifenfuß durch Schweißen und/oder Kleben und/oder Verklipsen verbunden werden kann. Es bereitet keine Probleme, den Extrusionskopf so zu gestalten, daß das erforderliche Profil am Reifenfuß angebracht ist.

Es ist besonders vorteilhaft, wenn als thermoplastisch verarbeitbares Elastomer bekannte Polyurethanelastomere verwendet werden; geeignet sind beispielsweise die Handelsprodukte ® Desmopan 385 oder ® Desmopan 790. Es können auch Kombinationen von thermoplastischen Polyurethanelastomeren und PVC verwendet werden, auch EPDM-modifizierte Polyolefine können verwendet werden.

Als strangförmige Armierungseinlagen sind besonders geeignet Fäden oder Drähte aus Stahl und/oder natürlichen und/oder synthetischen Fasern auf Basis Baumwolle, Cellulose, Polyamid, Polyester, Polyacrylnitril oder Glas sowie Einlagen aus Cord. Zur Erzielung des notwendigen Verbundes zwischen dem thermoplastischen Elastomer und den Armierungseinlagen kann eine Entfettung und eine Präparierung mit Haftvermittlern notwendig sein. Bewährt haben sich Haftvermittler auf Basis von Isocyanaten, Polyurethanen und Phenolharzen.

Zur Verstärkung des Reifens können dem thermoplastisch verarbeitbaren Material vor der Extrusion Kurzfasern aus Glas oder natürliche oder synthetische Fasern beigegeben werden.

Der endlose extrudierte Körper kann in einfacher Weise bekanntlich durch Profilwalzen zusätzlich ein Profil, insbesondere senkrecht zur Extrusionsrichtung, erhalten. Das ist unmittelbar nach der Extrusion möglich, wenn der Körper noch hinreichend plastisch verformbar ist. Aber auch durch ein späteres thermoplastisches Prägen lassen sich die Laufflächen profilieren.

Beim Trennen des extrudierten Körpers ist es günstig, wenn der Körper nicht glatt, senkrecht zur Extrusionsrichtung durchschnitten wird, sondern wenn das Trennen durch gewelltes oder gestuftes Stanzen erfolgt. Dadurch verteilt sich am fertigen Reifen die Verbindungsstelle, die manchmal eine Schwachstelle sein kann, auf einen größeren Umfangsbereich, wodurch die Sicherheit verbessert wird.

Durch Zusammenschweißen des thermoplastischen Materials an den Enden des abgeteilten Stücks wird ein armiertes, reifenartiges Gebilde erhalten. Die Schweißpresse ist dem Profil und der Krümmung des resultierenden Reifens angepaßt. Die Kernpartien der Heißpresse lassen sich üblicherweise bis auf 250°C aufheizen und durch Wasser kühlen. Der Preßdruck beträgt beispielsweise 20 bis 50 bar.

Nach dem erfindungsgemäßen Verfahren lassen sich torusförmige Luftreifen für die verschiedensten Einsatzgebiete herstellen. Es ist auch möglich, nach dem Verfahren bandartige Laufringe zu fertigen, die als Laufflächen für Spezialreifen weiterverwendet werden.

Die erfindungsgemäßen Reifen sind in der Zeichnung dargestellt und im folgenden beispielhaft beschrieben. Es zeigen:

Figur 1 Querschnitt durch einen endlosen extrudierten Körper

Figuren 2 bis 4 Verbindungen des Wulstdrahtes

Figur 5 Stoßstelle bei abgestuftem Trennen der extrudierten Körper

Figur 6 Querschnitt durch einen Reifen, bei dem ein extra hergestellter Wulstdraht eingelegt ist.

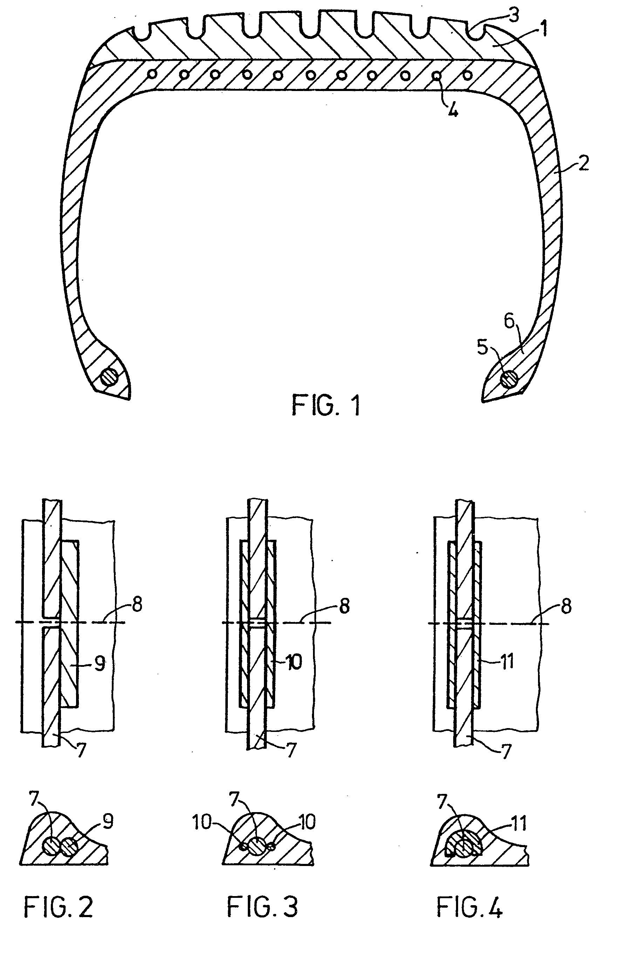

In Figur 1 ist der Querschnitt eines Luftreifens dargestellt; dieses Reifenprofil kann im Prinzip endlos extrudiert werden. 2 Polyurethane werden koextrudiert; die Härte für die Lauffläche 1 ist niedriger als für die Seitenwand 2 des Reifens. Durch ein entsprechend geformte Öffnung am Extruder wird ein Längsprofil 3 gebildet. Stahldrähte sind in der Decke 4 und als Wulstdraht 5 im Reifenfuß 6 vorhanden.

In den Figuren 2 bis 4 sind drei Verbindungsmöglichkeiten der freien Enden des Wulstdrahtes 7 an der Stoßstelle 8 in Draufsicht und im Querschnitt dargestellt. In Figur 2 werden ein etwa gleich starker Draht 9, in Figur 3 zwei dünne Stahldrähte 10 and den Draht 7 angedrückt und dadurch eingeschweißt, die nach dem Schweißen hinreichende Kräfte übertragen können. In Figur 4 wird ein halbkreisförmiges Profil 11 über die beiden Enden 7 gepreßt.

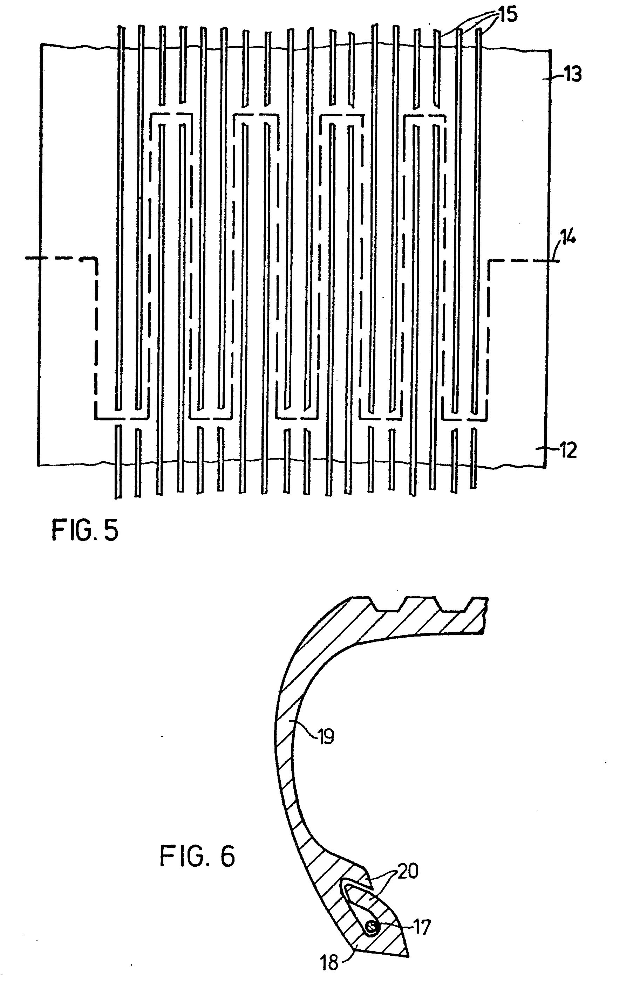

In Figur 5 ist die Lauffläche eines Reifens mit der Stoßstelle dargestellt. Die beiden Enden 12, 13 des aus dem Armierungseinlagen 15 enthaltenden, endlosen Körper abgetrennten Reifenstückes stoßen längs der strichliert eingezeichneten Linie 14 aneinander. Die Linie 14 ist durch das Stanzwerkzeug zum Zerteilen des endlos extrudierten Körpers bestimmt. Die Stellen, wo die Armierungselemente aneinanderstoßen, sind in diesem Beispiel auf zwei Stellen des Reifenumfanges verteilt.

In vielen Fällen ist es zweckmäßig und einfacher möglich, den Wulstdraht 17 als Ring gesondert herzustellen und ihn in den Reifenfuß 18 nach dem Zusammenschweißen der Reifenstücke 19 einzulegen. Die Ausnehmungen 20 am Reifenfuß werden bei der Extrusion erzeugt.

### Patentansprüche

1. Verfahren zur Herstellung reifenartiger, mit Armierungseinlagen versehener Gebilde aus thermoplastisch verarbeitbaren Elastomeren, bei dem das kontinuierliche Herstellungsverfahren für Reifen verwendet wird, das darin besteht, daß ein endloser Körper extrudiert wird, dieser Körper in Stücke zerteilt und jedes Stück reifenartig zusammengelegt wird, wobei die beiden Enden des Reifens an der Stoßstelle verbunden werden, dadurch gekennzeichnet, daß bei der Extrusion die Armierungseinlagen eingebaut und diese an den Enden untereinander verbunden werden.

2. Verfahren nach Anspruch 1, dadurch gekennzeichnet, daß als thermoplastisch verarbeitbare Elastomere Polyurethanelastomere verwendet werden.

3. Verfahren nach Ansprüchen 1 und 2, dadurch gekennzeichnet, daß als Armierungselemente Fäden oder Drähte aus Stahl und/oder natürlichen und/oder synthetischen Fasern oder Cord verwendet werden.

4. Verfahren nach Ansprüchen 1 bis 3, dadurch gekennzeichet, daß der endlose Körper in Längsrichtung bei der Extrusion profiliert wird.

5. Verfahren nach Ansprüchen 1 bis 4, dadurch gekennzeichnet, daß verschiedene thermoplastische Elastomere koextrudiert werden.

6. Verfahren nach Ansprüchen 1 bis 5, dadurch gekennzeichnet, daß der extrudierte Körper durch Prägewalzen ein Querprofil erhält.

7. Verfahren nach Ansprüchen 1 bis 6, dadurch gekennzeichnet, daß gesondert hergestellte Wulstdrähte in Ausnehmungen im Reifenfuß eingelegt werden und durch Schweißen und/oder Kleben und/oder Verklipsen befestigt werden.

8. Verfahren nach Ansprüchen 1 bis 7, dadurch gekennzeichnet, daß die Zerteilung des extrudierten Körpers nicht durch einen gerarden Schnitt, sondern durch gewelltes oder gestuftes Stanzen erfolgt.

9. Torusförmige Luftreifen für Fahrzeuge aller Art, hergestellt nach einem der Verfahren gemäß der Ansprüche 1 bis 8.

10. Bandartige Laufringe, hergestellt nach einem der Verfahren gemäß der Ansprüche 1 bis 8.

11. Vorrichtung zur Durchführung des Verfahrens nach Ansprüchen 1 bis 8, enthaltend einen Extruder, dadurch gekennzeichnet, daß die Extruderöffnung als Querspritzkopf ausgebildet ist.

12. Vorrichtung nach Anspruch 11, dadurch gekennzeichnet, daß profilierte Walzen vorhanden sind.

13. Vorrichtung nach Ansprüchen 11 und 12, dadurch gekennzeichnet, daß das profilgebende Mundstück am Extruder gekrümmt ist.

**Revendications**

1. Procédé de fabrication d'articles analogues à bandages pneumatiques comportant des pièces intérieures d'armature et réalisés en élastomères transformables par voie thermoplastique, procédé dans lequel on adopte le mode de fabrication en continu pour bandages pneumatiques consistant à extruder un corps sans fin, tronçonner ce corps en différentes pièces, puis assembler chaque pièce à la manière d'un bandage pneumatique, les deux extrémités de ce dernier étant ensuite assemblées au point d'aboutement, caractérisé en ce que les pièces intérieures d'armature sont incorporées lors de l'extrusion, pour être ensuite assemblées l'une à l'autre à leurs extrémités.

2. Procédé suivant la revendication 1, caractérisé en ce que, comme élastomères transformables par voie thermoplastique, on utilise des élastomères de polyuréthanes.

3. Procédé suivant l'une quelconque des revendications 1 et 2, caractérisé en ce que, comme éléments d'armature, on utilise des filaments ou des fils d'acier et/ou de fibres naturelles et/ou de fibres synthétiques ou encore des câbles.

4. Procédé suivant l'une quelconque des revendications 1 à 3, caractérisé en ce que le corps sans fin est profilé dans le sens longitudinal lors de l'extrusion.

5. Procédé suivant l'une quelconque des revendications 1 à 4, caractérisé en ce qu'on co-extrude différents élastomères thermoplastiques.

6. Procédé suivant l'une quelconque des revendications 1 à 5, caractérisé en ce qu'on confère un profil transversal au corps extrudé au moyen de cylindres de gaufrage.

7. Procédé suivant l'une quelconque des revendications 1 à 6, caractérisé en ce qu'on incorpore des tringles de bourrelet réalisées séparément dans des cavités formées dans le talon du bandage pneumatique, pour les fixer ensuite par soudage et/ou par collage et/ou par agrafage.

8. Procédé suivant l'une quelconque des revendications 1 à 7, caractérisé en ce que le découpage du corps extrudé a lieu non pas par une coupe droite, mais par un découpage ondulé ou en gradins.

9. Bandages pneumatiques toroïdaux pour véhicules de tous types, caractérisés en ce qu'ils sont réalisés par le procédé suivant l'une quelconque des revendications 1 à 8.

10. Bagues de roulement sous forme de bandes, caractérisées en ce qu'elles sont réalisées par le procédé suivant l'une quelconque des revendications 1 à 8.

11. Dispositif pour la réalisation du procédé suivant l'une quelconque des revendications 1 à 8, ce dispositif comportant une extrudeuse, caractérisé en ce que l'ouverture de l'extrudeuse est réalisée sous forme d'une tête d'injection transversale.

12. Dispositif suivant la revendication 11, caractérisé en ce qu'on prévoit des cylindres profilés.

13. Dispositif suivant l'une quelconque des revendications 11 et 12, caractérisé en ce que l'embouchure déterminant le profil à l'extrudeuse est courbe.

**Claims**

1. A process for the manufacture of tyres or similar structures from thermoplastic elastomere with armouring inserts, wherein the continuous method of manufacturing tyres is used which comprises extruding an endless body, which body is subdivided into pieces and each piece is joined together in the form of a tyre, both ends of the tyre being joined at their abutment, characterized in that during the extrusion the armouring inserts are incorporated and joined together at their ends.

2. The process according to claim 1, characterized in that the thermoplastic elastomers used are polyurethane elastomers.

3. The process according to claims 1 and 2, characterized in that the armouring elements used are threads or wires of steel and/or natural and/or synthetic fibres or cord.

4. The process according to claims 1 to 3, characterized in that the endless body is profiled in the longitudinal direction during extrusion.

5. The process according to claims 1 to 4, characterized in that various thermoplastic elastomers are co-extruded.

6. The process according to claims 1 to 5, characterized in that a transverse profile is imparted to the extruded body by stamping rollers.

7. The process according to claims 1 to 6,

**0 003 782**

characterized in that separately produced toroidal wires are placed in recesses in the foot of the tyre and fixed by welding and/or gluing and/or clamping.

8. The process according to claims 1 to 7. characterized in that the extruded body is severed not by a straight cut but by corrugated or stepped punches.

9. Toroidal pneumatic tyres for vehicles of all types, manufactured by one of the processes according to claims 1 to 8.

10. Tread rings in the form of bands manufactured by one of the processes according to claims 1 to 8.

11. Apparatus for carrying out the process according to claims 1 to 8, containing an extruder, characterized in that the extruder opening is constructed as a transverse spray head.

12. Apparatus according to claim 11, characterized in that it comprises profiled rollers.

13. Apparatus according to claims 11 and 12, characterized in that the mouthpiece which provides the profile on the extruder is curved.

FIG. 1

FIG. 2      FIG. 3      FIG. 4

0 003 782

FIG. 5

FIG. 6

2